# FASCICULE DE BREVET EUROPEEN

(11) **EP 2 628 614 B1**
(45) Date de publication et mention de la délivrance du brevet: **14.05.2014**
(21) Numéro de dépôt: 13155728.2
(22) Date de dépôt: 19.02.2013
(51) Int. Cl.: B60G 7/00, B60G 9/00, B60G 7/02

(54) **Suspension pour véhicule de transport**
Federungssystem für Transportfahrzeug
Suspension for transport vehicle

(30) Priorité: 20.02.2012 FR 1251537
(43) Date de publication de la demande: 21.08.2013
(73) Titulaire: Colaert Essieux, 59189 Steenbecque (FR)
(72) Inventeur: Six, Christian, 59190 Hazebrouck (FR)
(74) Mandataire: Cabinet Plasseraud

(56) Documents cités:
- JP-A- 2002 308 143
- US-A- 2 607 617
- US-A- 4 262 929
- US-A1- 2005 029 768
- US-A1- 2008 084 047
- US-A1- 2009 001 680
- US-A1- 2009 267 338

## Description

L'invention est relative à un dispositif de suspension de véhicule de transport de charge, telle qu'une remorque, ledit dispositif étant destiné à relier le châssis du véhicule à un essieu du véhicule.

L'invention concerne également un procédé de réglage d'une telle suspension.

De tels dispositifs permettent d'amortir les irrégularités de la route en autorisant un déplacement relatif entre l'essieu et le châssis du véhicule, et ont pour objet d'améliorer la tenue de route du véhicule.

Le domaine de l'invention est celui des dispositifs de suspension de véhicules de transport de charge, telles que remorques de tracteur agricole ou camion utilisées pour le transport de charge (i.e. remorque benne). De telles remorques sont classiquement utilisées pour transporter des matériaux de construction, des gravats, des produits de l'agriculture, des produits forestier ou autres matériaux et sont amenées à évoluer sur des terrains accidentés.

Dans ce domaine, les dispositifs de suspension de l'état de la technique comprennent classiquement, pour chaque essieu, deux lames ressorts, disposées de manière parallèles entre elles au repos, chacune bridée de manière rigide sur l'essieu. Classiquement chaque lame ressort vient s'articuler à une de ses extrémités à une chape rigidement solidaire du châssis du véhicule.

La charge verticale supportée par l'essieu est assurée par des suspensions, classiquement à ressorts, à coussins d'air, ou encore, au moyen de vérins hydrauliques montés en simple ou en double effets. Par exemple et, dans le cas de suspension à vérins hydrauliques, chaque vérin hydraulique peut relier directement l'essieu au châssis. Dans le cas de coussins d'air, chaque coussin d'air peut relier le châssis à l'extrémité de la lame ressort opposée à celle articulée à la chape.

Lors de débattements importants, surtout vers le bas d'un côté de l'essieu et vers le haut, de l'autre côté de l'essieu, apparaissent des contraintes importantes sur les parties de bridage entre l'essieu et les lames ressorts. Au cours du temps ces contraintes affectent le bridage et l'intégrité de l'ensemble.

Ainsi, au cours d'une certaine période d'utilisation, et selon les conditions d'utilisation, on peut constater des déformations dans les plaques de bridage, engendrant des décalages et des défauts de positionnement de l'essieu par rapport au châssis du véhicule.

Bien souvent ces décalages et défauts de positionnement sont à l'origine d'une usure anormale des pneumatiques de l'essieu et nuisent au bon fonctionnement de la suspension.

L'état de la technique connaît toutefois du document US.4.262.929 un dispositif de suspension équipé d'une bielle résiliente, trouvant une application particulière pour suspendre l'essieu avant d'un bus.

Cette suspension comprend deux liaisons articulées formant respectivement deux parallélogrammes déformables, sensiblement parallèles en eux.

Chaque liaison comprend une chape fixée rigidement à une poutre longitudinale du châssis du véhicule, un support rigidement solidaire de l'essieu et deux biellettes reliant chacune ladite chape audit support.

Cette suspension comprend deux suspensions à air et deux dispositifs absorbeurs de choc joignant respectivement le châssis à l'essieu.

Une bielle, résiliente est montée transversalement au châssis et s'étend à partir de l'essieu, au dessous de l'une des poutres longitudinales du châssis jusqu'à un support fixé rigidement à l'autre poutre longitudinale du châssis.

Cette bielle a notamment pour fonction de maintenir la stabilité latérale de l'essieu par rapport au châssis du véhicule.

Toutefois et selon les constatations de l'inventeur, le réglage d'une telle suspension n'est possible que lors de la pose du dispositif de suspension sur le châssis du véhicule. En particulier l'alignement transversal de la suspension du document US.4.262.929 est obtenu par le réglage du positionnement du support de l'extrémité supérieure de la bielle transversale sur l'une des poutres longitudinales du châssis.

Le but de la présente invention est de pallier les inconvénients précités en proposant un dispositif de suspension de véhicule de transport de charge, de fiabilité accrue.

Plus particulièrement un objectif de la présente invention est de proposer un dispositif de suspension permettant de laisser toute liberté de débattement verticale de l'essieu, avec un maintien latéral de l'essieu bien défini, supprimant les contraintes de flexion et de torsion sur l'essieu telles que rencontrées dans les dispositifs de l'état de la technique.

Un autre but de la présente invention est de proposer un tel dispositif, compact. Un autre but de la présente invention est de proposer un tel dispositif, limitant les opérations lors de la pose du dispositif sur le châssis du véhicule. Un autre but de la présente invention est de proposer un tel dispositif dont les réglages sont facilités.

D'autres buts et avantages de la présente invention apparaitront au cours de la description qui va suivre qui n'est donnée qu'à titre indicatif et qui n'a pas pour but de la limiter.

Aussi l'invention concerne un dispositif de suspension de véhicule de transport de charge, telle qu'une remorque, ledit dispositif étant destiné à relier le châssis du véhicule à un essieu du véhicule, ledit dispositif comprenant ledit essieu, ainsi que deux liaisons articulées formant respectivement deux parallélogrammes déformables, parallèles entre eux, chaque liaison articulée étant destinée à relier ledit essieu audit châssis du véhicule, chaque liaison articulée comprenant :
- une chape destinée à être fixée rigidement solidaire du châssis du véhicule,
- un support rigidement solidaire de l'essieu,
- deux biellettes reliant chacune ladite chape audit support, chacune des deux biellettes étant articulée à ses extrémités à ladite chape et au support par l'intermédiaire de liaisons rotules,
ledit dispositif comprenant des moyens pour le maintien latéral de l'essieu.

Les deux liaisons articulées dudit dispositif de suspension conforme à l'invention permettent de laisser toute liberté de débattement verticale de l'essieu par rapport au châssis du véhicule, sans contraintes sur l'essieu.

Avantageusement, selon l'invention, lesdits moyens pour le maintien latéral de l'essieu comprennent une bielle transversale reliant l'une des chapes de l'une des liaisons articulées, d'un côté du véhicule, à l'essieu, de l'autre côté du véhicule, au niveau du support de l'autre des liaisons articulées.

Les deux points d'ancrage de cette bielle transversale sont ainsi agencés sur le dispositif de suspension, et non directement sur le châssis comme c'est le cas dans l'antériorité US.4.262.929, limitant ainsi le nombre de points d'ancrage de la suspension avec le châssis.

Avantageusement ladite bielle transversale est ainsi disposée dans l'inter-espace formé entre les deux parallélogrammes déformables, obtenant un dispositif de suspension compact.

Selon un mode de réalisation de l'invention ledit dispositif comprend deux suspensions destinées à relier chacune l'essieu au châssis du véhicule, aptes à reprendre la charge verticale portée par l'essieu, lesdites deux suspensions étant notamment choisies parmi :
- suspension à ressort,
- suspension à vérin hydraulique,
- suspension à coussin d'air.

Selon des caractéristiques optionnelles de l'invention, prises seules ou en combinaison :
- lesdites deux suspensions sont respectivement ancrées sur ledit essieu, de part et d'autre des deux liaisons articulées ;
- ledit dispositif comprend une poutre solidarisant de manière rigide les deux chapes des deux liaisons articulés ;
- chaque chape comprend deux flasques, sensiblement disposées parallèles audit parallélogramme déformable de la liaison articulée correspondante, entre lesquelles s'étendent partiellement les deux biellettes de la liaison articulée correspondante, lesdits flasques servant de points d'ancrage pour les extrémités desdites biellettes.
- les deux biellettes de l'une au moins des deux liaisons articulées sont des biellettes de longueur réglable, par exemple du type à vis et/ou ladite bielle transversale est de longueur réglable, par exemple du type à vis.

L'invention concerne également un procédé de réglage d'un dispositif de suspension, à biellettes/bielles de longueur réglable, comprenant les étapes suivantes, préalablement à l'ancrage dudit dispositif de suspension sur le châssis du véhicule :
- réglage du parallélisme par le réglage des longueurs desdits deux biellettes de l'une au moins des deux liaisons articulés et/ou,
- réglage de l'alignement transversal de l'essieu par réglage de la longueur de ladite bielle transversale. Un tel dispositif à bielle/bielettes réglables permet ainsi avantageusement de pouvoir effectuer les réglages de la suspension en atelier, préalablement à l'ancrage du dispositif de suspension sur le châssis du véhicule. L'invention concerne également un véhicule de transport de charge comprenant un ou plusieurs dispositifs de suspension conformes à l'invention.
Selon des caractéristiques optionnelles de l'invention prises seules ou en combinaison :
- ledit essieu d'au moins un dispositif de suspension est un essieu fixe, non directeur ;
- ledit essieu d'au moins un dispositif de suspension est un essieu directeur ;
- ledit essieu d'au moins un dispositif de suspension est un essieu suiveur ou autodirecteur. L'invention sera mieux comprise à la lecture de la description suivante accompagnée des dessins en annexe parmi lesquelles :
- La figure 1 est une vue de côté d'un dispositif de suspension conforme à l'invention selon un mode de réalisation,
- La figure 2 est une vue de dessus dudit dispositif de suspension, tel qu'illustré à la figure 1,
- La figure 3 est une vue en perspective ¾ avant du dispositif tel qu'illustré à la figure 1,
- La figure 4 est une vue en perspective ¾ avant du dispositif tel qu'illustré à la figure 1,
- La figure 5 est une vue de dessus d'un dispositif de suspension de véhicule de transport de charge, tel que connu de l'état de la technique,
- La figure 6 est une vue selon la coupe A-A telle qu'illustré à la figure 5.

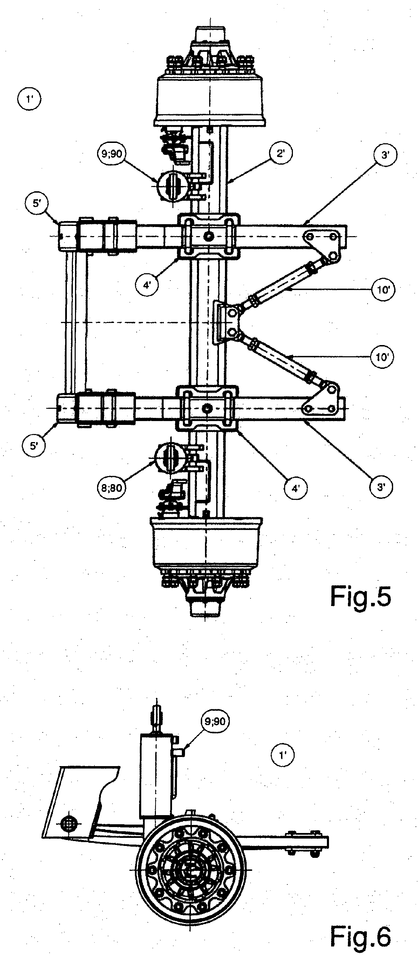

Nous commençons par décrire le dispositif de suspension représenté aux figures 5 et 6, illustrant un état de la technique connu dans le domaine des véhicules de transport de charge.

Aussi le dispositif de suspension de l'état de l'art comprend un essieu 2', ainsi que deux lames ressorts 3', s'étendant parallèlement entre elles, longitudinalement au véhicule, chacune bridée de manière rigide sur l'essieu 2'. Chaque lame ressort 3' vient s'articuler à l'une de ses extrémités à une chape rigidement solidaire du châssis du véhicule. L'autre extrémité de la lame ressort 3' est assujetti à l'essieu 2' par l'intermédiaire d'une biellette 10' reliant ladite extrémité à l'essieu, au niveau d'une partie médiane de l'essieu.

La charge verticale supportée par l'essieu 2' est assurée par des suspensions sous forme de vérins hydrauliques, chaque vérin hydraulique reliant directement l'essieu 2' au châssis. Comme déjà évoqué dans l'introduction de la présente demande, lors de débattements importants, surtout vers le bas d'un côté de l'essieu et vers le haut de l'autre côté de l'essieu, apparaissent des contraintes importantes sur le bridage 4' entre l'essieu 2' et les lames ressorts 3'. Au cours du temps ces contraintes affectent le bridage et l'intégrité de l'ensemble. A l'usage on constate des déformations dans le bridage 4' engendrant des décalages et des défauts de positionnement de l'essieu par rapport au châssis du véhicule.

L'invention concerne un dispositif 1 de suspension de véhicule de transport de charge, telle qu'une remorque. On entend par véhicule de transport de charge des véhicules convenant pour le transport de charge supérieure à 5 tonnes.

Ledit dispositif 1 de suspension est destiné à relier le châssis du véhicule à un essieu 2 du véhicule. Un tel essieu 2 peut supporter jusqu'à 13 tonnes à lui seul, voire plus.

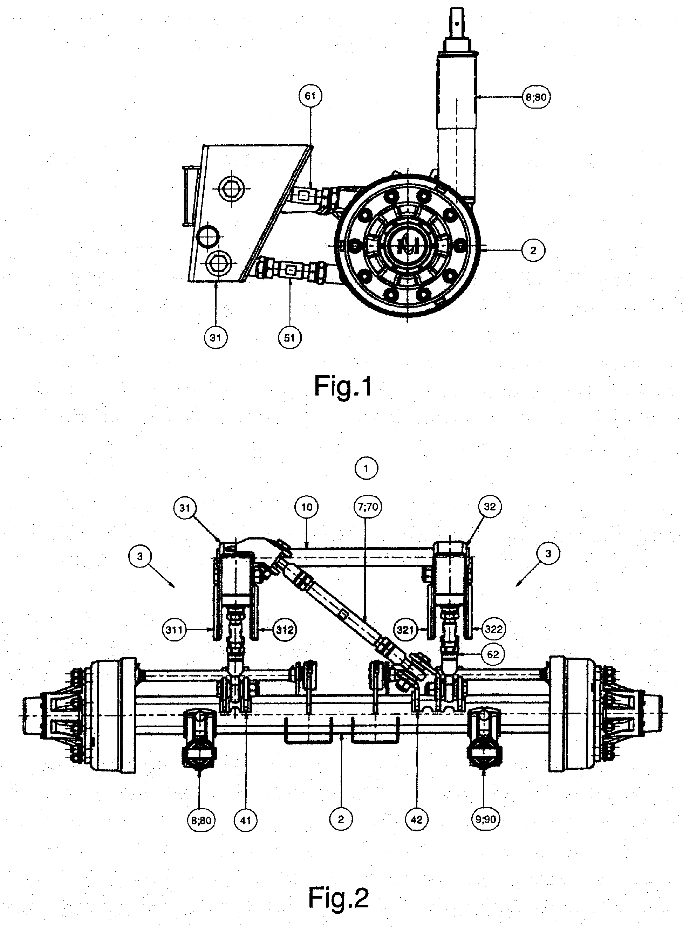

Selon un mode de réalisation illustré aux figures 1 à 4, l'essieu 2 peut être un essieu fixe, c'est-à-dire non directeur. Les moyeux des roues sont ainsi toujours d'axe parallèle à l'axe du corps de l'essieu 2.

Selon un autre mode de réalisation, non illustré, ledit essieu peut être un essieu directeur, voire un essieu suiveur ou autodirecteur. Dans ce cas les moyeux des roues, sont montés pivotant par rapport au corps d'essieu. Dans le cas d'un essieu directeur, le pivotement des roues est obtenu au moyen d'un actionneur, tel qu'un vérin, commandé par le conducteur du véhicule. Un tel essieu directeur permet au conducteur de contrôler et de changer la direction du véhicule. Dans le cas d'un essieu suiveur ou autodirecteur, les roues sont montées pivotantes de manière à suivre la trajectoire prise par le véhicule. La rotation des roues d'un essieu suiveur n'est pas commandée par le conducteur.

Ledit dispositif 1 de suspension conforme à l'invention comprend ledit essieu 2, ainsi que deux liaisons articulées 3 formant respectivement deux parallélogrammes déformables, parallèles entre eux, chaque liaison articulée 3 étant destinée à relier ledit essieu 2 audit châssis du véhicule. Deux sommets du parallélogramme déformable sont destinés à être solidaire du châssis, les deux autres sommets solidaire du corps de l'essieu 2.

Plus particulièrement chaque liaison articulée 3 comprend :
- une chape 31;32 destinée à être fixée rigidement solidaire du châssis du véhicule,
- un support 41;42 rigidement solidaire de l'essieu 2,
- deux biellettes 51,61;52,62 reliant chacune ladite chape 31; 32 audit support 41;42, chacune des deux biellettes 51,61;52,62 étant articulée à ses extrémités à ladite chape 31;32 et au support 41;42 par l'intermédiaire de liaisons rotules.

Pour chacun des deux parallélogrammes déformables, les deux biellettes 51,61 ou 52,62 de chaque liaison articulé 3 forment les deux grands côtés du parallélogramme déformable.

Les deux liaisons articulés 3 autorisent le déplacement de l'essieu 2 par rapport au châssis du véhicule, à la verticale, avantageusement sans mouvement de rotation de l'essieu suivant un axe parallèle à l'axe longitudinale de l'essieu 2.

Les liaisons rotules aux extrémités des biellettes 51,61;52,62 autorisent par ailleurs le déplacement latérale de l'essieu par rapport au châssis du véhicule.

Ce déplacement latérale est bloqué, voir fortement limité grâce à des moyens 7 pour le maintien latéral de l'essieu, distincts desdites liaisons articulés 3. Ce déplacement latéral est, de préférence, contenu inférieur à 30 mm lors du débattement du dispositif de suspension.

Selon l'invention, lesdits moyens 7 pour le maintien latéral de l'essieu 2 comprennent une bielle transversale 70 reliant l'une des chapes 31 de l'une des liaisons articulées 3, d'un côté du véhicule, à l'essieu 2, de l'autre côté du véhicule, au niveau du support 42 de l'autre des liaisons articulées 3, ladite bielle transversale 70 étant disposée dans l'inter-espace formé entre les deux parallélogrammes déformables.

Les deux points d'ancrage de cette bielle transversale 70, constitués par deux liaisons rotules, sont ainsi choisis proches de deux petits côtés appartenant respectivement aux deux parallélogrammes déformables desdites liaisons articulées 3, et de façon à limiter le déplacement latéral de l'essieu lors du débattement à la verticale du dispositif de suspension. Un tel choix permet de contenir ce déplacement latéral, de préférence inférieure à 30 mm lors du débattement vertical du dispositif 1.

Le dispositif 1 de suspension peut comprendre deux suspensions 8,9 destinées à relier chacune l'essieu 2 au châssis du véhicule, lesdites deux suspensions 8,9 étant notamment choisies parmi :
- suspension à ressort,
- suspension à vérin hydraulique,
- suspension à coussin d'air.

La fonction de ces suspensions 8,9 est de reprendre la charge verticale supportée par l'essieu 2. Dans le cas de suspension à vérin hydraulique à multiple essieux comprennent plusieurs dispositifs conformes à l'invention, les chambres de vérins hydrauliques, d'un même côté du véhicule, peuvent être mises en communisation au moyen de conduites telles que flexibles. Cette mise en communication permet d'avoir une répartition de charge sur chaque essieu, quelque soit la configuration du terrain. La compression d'un vérin hydraulique d'un côté de l'essieu chasse l'huile de la chambre de ce vérin jusqu'à la ou les chambres du ou des autres vérins des autres essieux, provoquant le déploiement des vérins concernés du même côté de l'essieu.

Selon un mode de réalisation, lesdites deux suspensions 8,9 sont respectivement ancrées sur ledit essieu 2, de part et d'autre des deux liaisons articulées 3.

Un tel dispositif 1 muni d'une bielle transversale 70, telle que précédemment décrite, permet d'être fixé au châssis au niveau de quatre points d'ancrage seulement, deux au niveau des deux chapes 31,32, les deux autres au niveau des deux extrémités supérieures des deux suspensions 8,9, facilitant la pose du dispositif 1 sur le châssis du véhicule.

Selon un mode de réalisation le dispositif 1 peut comprendre une poutre de renfort 10 solidarisant de manière rigide les deux chapes 31,32 des deux liaisons articulées 3.

Selon un mode de réalisation chaque chape 31,32 peut comprendre deux flasques 311,312;321,322, sensiblement disposées parallèles audit parallélogramme déformable de la liaison articulée correspondante 3, entre lesquelles s'étendent partiellement les deux biellettes 51,61;52,62 de la liaison articulée correspondante, lesdits flasques servant de points d'ancrage pour les extrémités desdites biellettes 51,61;52,62.

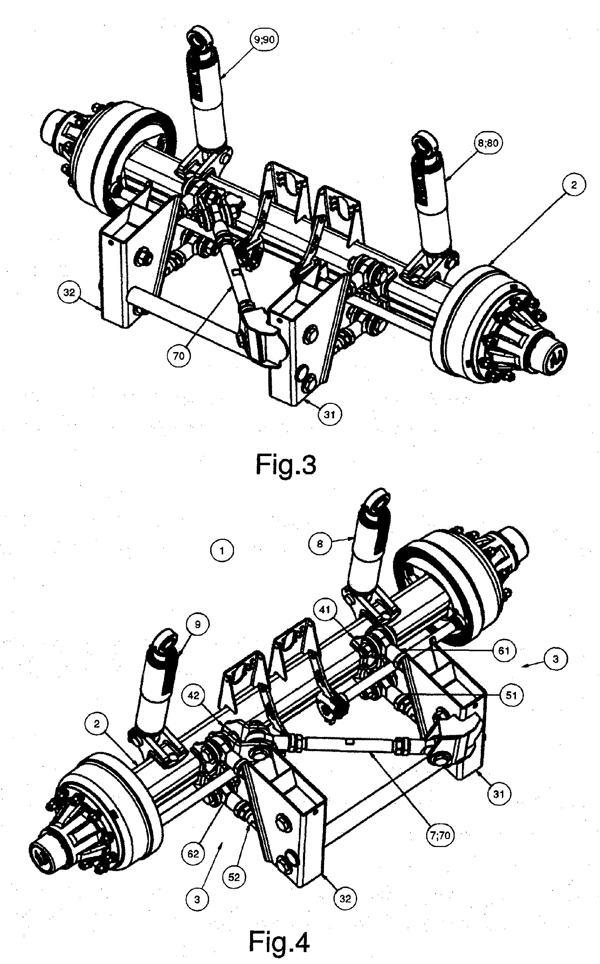

Les deux flasques 311,312 ou 321,322 peuvent être constituées par une même tôle pliée en U, tel que notamment illustrées à la figure 4, ou encore être constituées par deux tôles distinctes.

De préférence, les deux biellettes 51,61 ; 52,62 de l'une au moins des deux liaisons articulées sont des biellettes de longueur réglable. Par exemple les deux biellettes 51,61 d'une liaison articulée peuvent être de longueur réglable, les deux autres biellettes 52,62 de l'autre liaison articulée étant de longueur fixe (ou inversement). Selon une autre alternative les quatre biellettes 51,61 ; 52,62 des deux liaisons articulées peuvent être de longueur réglage. Avantageusement ladite bielle transversale 70 peut être de longueur réglable. Les biellettes/bielles réglables peuvent être du type à vis comprenant une tige à double filetage inversé. La rotation de la tige sur son axe, dans un premier sens, permet de diminuer la longueur de la bielle/bielette, ou au contraire de l'augmenter dans la rotation de sens opposé.

Avantageusement le réglage de la suspension peut être effectué préalablement à l'ancrage du dispositif de suspension au châssis du véhicule, en particulier lors de la fabrication du dispositif de suspension,

Le réglage de parallélisme est obtenu par le réglage des longueurs des biellettes 51 et 61 de l'une des liaisons articulées, ou 52 et 62 de l'autre liaison articulée. Le réglage de l'alignement transversal est obtenu par le réglage de la longueur de la bielle transversale 70.

Le dispositif de suspension 1 conforme à l'invention trouvera une application particulière pour équiper des véhicules de transport, tel que des remorques de tracteur agricole ou camion, destinés à évoluer sur des terrains accidentés.

### NOMENCLATURE

### Invention (Figures 1 à 4) :

1 Dispositif de suspension,
2 Essieu,
3 Liaisons articulées,
7 Moyens pour le maintien latéral de l'essieu,
8,9 Suspension,
10 Poutre de renfort,
31 Chape (gauche),
32 Chape (droite),
41 Support (gauche),
42 Support (droite),
51 Biellette (inférieure gauche),
61 Biellette (supérieure gauche),
52 Biellette (inférieure droite),
62 Biellette (supérieure droite),
70 Bielle transversale,
80 Vérin hydraulique (suspension 8),
90 Vérin hydraulique (suspension 9),
311,312 flasques (chape gauche),
321,322 flasques (chape droite).

Etat de la technique (Figure 5 et 6) :
1' Dispositif de suspension,
2'Essieu,
3' lames ressort,
4' Bridage,
5' Chapes,
8,9 Suspensions hydrauliques.

## Revendications

1. Dispositif (1) de suspension de véhicule de transport de charge, telle qu'une remorque, ledit dispositif étant destiné à relier le châssis du véhicule à un essieu (2) du véhicule, ledit dispositif (1) comprenant ledit essieu (2), ainsi que deux liaisons articulées (3) formant respectivement deux parallélogrammes déformables, parallèles entre eux, chaque liaison articulée (3) étant destinée à relier ledit essieu (2) audit châssis du véhicule, chaque liaison articulée (3) comprenant :
- une chape (31;32) destinée à être fixée rigidement solidaire du châssis du véhicule,
- un support (41;42) rigidement solidaire de l'essieu (2),
- deux biellettes (51,61;52,62) reliant chacune ladite chape (31;32) audit support (41;42), chacune des deux biellettes (51;52) étant articulée à ses extrémités à ladite chape (31;32) et au support (41;42) par l'intermédiaire de liaisons rotules,
ledit dispositif comprenant, en outre, des moyens (7) pour le maintien latéral de l'essieu comportant une bielle transversale (70) **caractérisé en ce que** ladite bielle transversale (70) relie l'une des chapes (31) de l'une des liaisons articulées (3) à l'essieu au niveau du support (42) de l'autre des liaisons articulées (3), ladite bielle transversale (70) étant disposée dans l'inter-espace formé entre les deux parallélogrammes déformables.

2. Dispositif selon la revendication 1 comprenant deux suspensions (8,9) destinées à relier chacune l'essieu (2) au châssis du véhicule, apte à reprendre la charge verticale supportée par l'essieu (2), lesdites deux suspensions (8,9) étant choisies parmi :
- suspension à ressort,
- suspension à vérin hydraulique,
- suspension à coussin d'air.

3. Dispositif selon la revendication 2 dans lequel lesdites deux suspensions (8,9) sont respectivement ancrées sur ledit essieu (2), de part et d'autre des deux liaisons articulées (3).

4. Dispositif selon l'une des revendications 1 à 3, comprenant une poutre de renfort (10) solidarisant de manière rigide les deux chapes (31,32) des deux liaisons articulées (3).

5. Dispositif selon l'une des revendications 1 à 4, dans lequel chaque chape (31,32) comprend deux flasques (311,312;321,322), sensiblement disposées parallèles audit parallélogramme déformable de la liaison articulée correspondante (3), entre lesquelles s'étendent partiellement les deux biellettes (51,61;52,62) de la liaison articulée correspondante, lesdits flasques servant de points d'ancrage pour les extrémités desdites biellettes (51,62;52,62).

6. Dispositif selon l'une des revendications 1 à 5 dans lequel les deux biellettes (51,61 ; 52,62) de l'une au moins des liaisons articulées sont des biellettes de longueur réglable, par exemple du type à vis et/ou ladite bielle transversale (70) est de longueur réglable, par exemple du type à vis.

7. Véhicule de transport de charge comprenant un ou plusieurs dispositifs (1) de suspension conformes à l'une des revendications 1 à 6.

8. Véhicule de transport selon la revendication 7, dans lequel ledit essieu (2) d'au moins un dispositif (1) est un essieu fixe, non directeur.

9. Véhicule de transport selon la revendication 7, dans lequel ledit essieu (2) d'au moins un dispositif (1) est un essieu directeur.

10. Véhicule de transport selon la revendication 7, dans lequel ledit essieu (2) d'au moins un dispositif (1) est un essieu suiveur ou autodirecteur.

11. Procédé de réglage d'un dispositif (1) de suspension selon la revendication 6 comprenant les étapes suivantes, préalablement à l'ancrage dudit dispositif (1) de suspension sur le châssis du véhicule :
- réglage du parallélisme par le réglage des longueurs desdits deux biellettes (51,61 ; 52,62) de l'une au moins des deux liaisons articulées (3) et/ou,
- réglage de l'alignement transversal de l'essieu par réglage de la longueur de ladite bielle transversale (70).

## Patentansprüche

1. Aufhängungsvorrichtung (1) für Fahrzeug zum Lasttransport, wie zum Beispiel ein Anhänger, wobei die Vorrichtung dazu bestimmt ist, das Chassis des Fahrzeugs mit einer Achse (2) des Fahrzeugs zu verbinden, wobei die Vorrichtung (1) die Achse (2) sowie zwei Gelenkverbindungen (3) aufweist, die jeweils zwei verformbare Parallelogramme, die zueinander parallel sind, bilden, wobei jede Gelenkverbindung (3) dazu bestimmt ist, die Achse (2) mit dem Chassis des Fahrzeugs zu verbinden, wobei jede Gelenkverbindung (3) Folgendes aufweist:
- eine Gabel (31; 32), die dazu bestimmt ist, starr fest mit dem Chassis des Fahrzeugs verbunden zu sein,
- einen Träger (41; 42), der starr fest mit der Achse (2) verbunden ist,
- zwei Schwingarme (51, 61; 52, 62), die jeweils die Gabel (31; 32) mit dem Träger (41; 42) verbinden, wobei jeder der zwei Schwingarme (51; 52) an seinen Enden an der Gabel (31; 32) und an dem Träger (41; 42) über Kugelgelenkverbindungen angelenkt ist,
wobei die Vorrichtung ferner Mittel (7) zum seitlichen Halten der Achse aufweist, die einen Querschwingarm (70) aufweisen, **dadurch gekennzeichnet, dass** der Querschwingarm (70) eine der Gabeln (31) einer der Gelenkverbindungen (3) mit der Achse auf dem Niveau des Trägers (42) der anderen der Gelenkverbindungen (3) verbindet, wobei der Querschwingarm (70) in dem Zwischenraum angeordnet ist, der zwischen den zwei verformbaren Parallelogrammen ausgebildet ist.

2. Vorrichtung nach Anspruch 1, die zwei Aufhängungen (8, 9) aufweist, die dazu bestimmt sind, jeweils die Achse (2) mit dem Chassis des Fahrzeugs zu verbinden, geeignet, um die vertikale Last, die von der Achse (2) getragen wird, aufzunehmen, wobei die zwei Aufhängungen (8, 9) aus Folgenden ausgewählt sind:
- Federaufhängung,
- Aufhängung mit hydraulischem Zylinder,
- Aufhängung mit Luftkissen.

3. Vorrichtung nach Anspruch 2, bei der die zwei Aufhängungen (8, 9) jeweils auf der Achse (2) auf jeder Seite der zwei Gelenkverbindungen (3) verankert sind.

4. Vorrichtung nach einem der Ansprüche 1 bis 3, die einen Verstärkungsbalken (10) aufweist, der die zwei Gabeln (31, 32) der zwei Gelenkverbindungen (3) starr verbindet.

5. Vorrichtung nach einem der Ansprüche 1 bis 4, bei der jede Gabel (31, 32) zwei Flansche (311, 312; 321, 322) aufweist, die im Wesentlichen parallel zu dem verformbaren Parallelogramm der entsprechenden Gelenkverbindung (3) angeordnet sind, zwischen welchen sich zum Teil die zwei Schwingarme (51, 61; 52, 62) der entsprechenden Gelenkverbindung erstrecken, wobei die Flansche als Verankerungspunkte für die Enden der Schwingarme (51, 62; 52, 62) dienen.

6. Vorrichtung nach einem der Ansprüche 1 bis 5, bei der die zwei Schwingarme (51, 61; 52, 62) mindestens einer der Gelenkverbindungen Schwingarme mit einstellbarer Länge sind, zum Beispiel des Typs mit Schraube und/oder wobei der Querschwingarm (70) einstellbare Länge hat, zum Beispiel des Typs mit Schraube.

7. Fahrzeug zum Lasttransport, das eine oder mehrere Aufhängvorrichtungen (1) gemäß einem der Ansprüche 1 bis 6 aufweist.

8. Fahrzeug zum Lasttransport nach Anspruch 7, wobei die Achse (2) mindestens einer Vorrichtung (1) eine stationäre Achse ist, die keine Lenkachse ist.

9. Fahrzeug zum Lasttransport nach Anspruch 7, bei dem die Achse (2) mindestens einer Vorrichtung (1) eine Lenkachse ist.

10. Fahrzeug zum Lasttransport nach Anspruch 7, wobei die Achse (2) mindestens einer Vorrichtung (1) eine Nachlaufachse oder eine selbst lenkende Achse ist.

11. Verfahren zum Einstellen einer Aufhängungsvorrichtung (1) nach Anspruch 6, das die folgenden Schritte vor der Verankerung der Aufhängungsvorrichtung (1) auf dem Chassis des Fahrzeugs aufweist:
- Einstellung der Parallelität durch die Einstellung der Längen der zwei Schwingarme (51, 61; 52, 62) mindestens einer der zwei Gelenkverbindungen (3) und/oder
- Einstellung der Querausrichtung der Achse durch Einstellen der Länge der Querschwingarme (70).

## Claims

1. Device (1) for the suspension of a transport vehicle, such as a trailer, said device intended to connect the frame of the vehicle to an axle (2) of the vehicle, said device (1) comprising said axle (2), as well as two joint connections (3) forming respectively two deformable parallelograms, parallel to each other, each joint connection (3) intended to connect said axle (2) to said frame of the vehicle, each joint connection (3) comprising:
- a cover (31; 32) intended to be rigidly fixed integral with the frame of the vehicle,
- a support (41; 42) rigidly integral with the axle (2),
- two rods (51, 61; 52, 62) each connecting said cover (31; 32) to said support (41; 42), with each of the two rods (51; 52) being articulated at its ends to said cover (31; 32) and to the support (41; 42) by the intermediary of ball-joint connections,
said device further comprising means (7) for the lateral maintaining of the axle comprising a transverse rod (70) **characterised in that** said transverse rod (70) connects one of the covers (31) of one of the joint connections (3) to the axle on the support (42) of the other of the joint connections (3), with said transverse rod (70) being arranged in the inter-space formed between the two deformable parallelograms.

2. Device according to claim 1 comprising two suspensions (8, 9) each intended to connect the axle (2) to the frame of the vehicle, able to take up the vertical load supported by the axle (2), with said suspensions (8, 9) being chosen from among:
- spring suspension,
- hydraulic cylinder suspension,
- air cushion suspension.

3. Device according to claim 2 wherein said two suspensions (8, 9) are respectively anchored on said axle (2), on either side of the two joint connections (3).

4. Device according to one of claims 1 to 3, comprising a reinforcement beam (10) that rigidly attaches the two covers (31, 32) of the two joint connections (3).

5. Device according to one of claims 1 to 4, wherein each cover (31, 32) comprises two flanges (311, 312; 321, 322), substantially arranged parallel to said deformable parallelogram of the corresponding joint connection (3), between which partially extend the two rods (51, 61; 52, 62) of the corresponding joint connection, with said flanges being used as anchoring points for the ends of said rods (51, 62; 52, 62).

6. Device according to one of claims 1 to 5 wherein the two rods (51, 61; 52, 62) of at least one of the joint connections are rods of an adjustable length, for example of the screw type and/or said transverse rod (70) is of an adjustable length, for example of the screw type.

7. Transport vehicle comprising one or several devices (1) for suspension in accordance with one of claims 1 to 6.

8. Transport vehicle according to claim 7, wherein said axle (2) of at least one device (1) is a fixed non-drive axle.

9. Transport vehicle according to claim 7, wherein said axle (2) of at least one device (1) is a drive axle.

10. Transport vehicle according to claim 7, wherein said axle (2) of at least one device (1) is a steering or self-drive axle.

11. Method of adjusting a device (1) for suspension according to claim 6 comprising the following steps, prior to the anchoring of said device (1) for suspension on the frame of the vehicle:
- adjusting the parallelism through adjusting the lengths of said two rods (51, 61; 52, 62) of at least one of the two joint connections (3) and/or,
- adjusting the transversal alignment of the axle by adjusting the length of said transverse rod (70).
